# EUROPÄISCHE PATENTSCHRIFT

(11) **EP 3 208 132 B1**
(45) Veröffentlichungstag und Bekanntmachung des Hinweises auf die Patenterteilung: **09.10.2019**
(21) Anmeldenummer: 16184372.7
(22) Anmeldetag: 16.08.2016
(51) Int. Cl.: B60K 35/00, B60K 37/02, B60K 37/06

(54) **FAHRZEUGINFORMATIONSSYSTEM IN EINEM FAHRZEUG UND VERFAHREN ZUM BETREIBEN EINES FAHRZEUGINFORMATIONSSYSTEMS**
VEHICLE INFORMATION SYSTEM IN A VEHICLE AND METHOD FOR OPERATION OF A VEHICLE INFORMATION SYSTEM
SYSTEME D'INFORMATIONS DE VEHICULE DANS UN VEHICULE ET SON PROCEDE DE FONCTIONNEMENT

(30) Priorität: 18.12.2015 DE 102015016420
(43) Veröffentlichungstag der Anmeldung: 23.08.2017
(73) Patentinhaber: Volkswagen Aktiengesellschaft, 38440 Wolfsburg (DE)
(72) Erfinder: Braun, Anna, 38114 Braunschweig (DE)

(56) Entgegenhaltungen:
- DE-A1-102005 017 313
- JP-A- 2012 181 766
- US-A1- 2011 163 864

## Beschreibung

Die vorliegende Erfindung betrifft ein Fahrzeuginformationssystem in einem Fahrzeug. Sie betrifft ferner ein Verfahren zum Betreiben eines Fahrzeuginformationssystems in einem Fahrzeug.

Eine Voraussetzung dafür, einem Fahrer eines Fahrzeugs das sichere und komfortable Führen des Fahrzeugs zu erlauben, ist die übersichtliche und leicht erfassbare Ausgabe von relevanten Informationen. Typischerweise sind dazu verschiedene Einrichtungen vorgesehen, wobei insbesondere eine Anzeige im Bereich des Sichtfeldes des Fahrers, etwa ein Kombiinstrument, vorgesehen ist. Der für eine solche Anzeige nutzbare Bereich ist begrenzt, um nicht die Übersichtlichkeit der Anzeige zu beeinträchtigen.

Aus der JP 2012 181766 A ist ein Fahrzeuginformationssystem in einem Fahrzeug mit einer Erfassungseinheit bekannt, durch die Betriebsdaten des Fahrzeuges erfassbar sind. Weiter weist das Fahrzeuginformationssystem eine Steuereinheit auf, durch die in Abhängigkeit von den erfassten Betriebsdaten des Fahrzeugs Grafikdaten einer Darstellung erzeugbar sind, wobei die Darstellung einen Hintergrundbereich und ein erstes und ein zweites Anzeigeobjekt umfasst, wobei zwischen dem ersten und dem zweiten Anzeigeobjekt ein Zwischenraum gebildet wird. Die Darstellung erfolgt auf einem Fahrzeuginformationsbildschirm. Dabei weist das Fahrzeuginformationssystem einen ersten Betriebsmodus und einen zweiten Betriebsmodus auf. Beim Übergang vom ersten zum zweiten Betriebsmodus werden die ersten und zweiten Anzeigeobjekte verkleinert bzw. nur noch symbolhaft dargestellt, beispielsweise mittels eines Punktes, wobei entsprechend größer zwischen den Anzeigeobjekten eine weitere Information dargestellt wird. Der verbleibende Punkt dient dabei zur Erinnerung des Nutzers, sodass dieser durch einfache Berührung des Punktes wieder auf den ersten Betriebsmodus zurückschalten kann.

Aus der DE 10 2005 017 313 A1 ist ein Fahrzeuginformationssystem in einem Fahrzeug mit einer Erfassungseinheit bekannt, durch die Betriebsdaten des Fahrzeuges erfassbar sind. Dabei werden die Informationen in Form von hierarchischen Menüstrukturen dargestellt. Die Darstellung erfolgt dabei stereoskopisch und/oder autostereoskopisch. Dabei wird weiter offenbart, dass die Geschwindigkeit und Motordrehzahl in Form eines Rundinstrumentes stereoskopisch dargestellt werden. Zwischen den beiden Rundinstrumenten kann dann eine Karte eines Navigationssystems dargestellt werden. Wird dann beispielsweise durch eine Bedieneinrichtung oder eine Berührung des Displays das Rundinstrument für die Drehzahl ausgewählt, wird dieses dreidimensional um eine vertikale Achse gedreht, bis man die virtuelle Rückseite dieses Rundinstrumentes sieht, auf der weitere Detailinformationen zur Umgebung des Fahrzeuges angezeigt werden. Es wird z.B. die Fahrtrichtung, die Fahrbahnsteigung und die Höhe angezeigt.

Der vorliegenden Erfindung liegt die Aufgabe zugrunde, ein Fahrzeuginformationssystem und ein Verfahren zum Betreiben eines solchen bereitzustellen, bei denen fahrtrelevante Daten dem Fahrer besonders schnell und flexibel ausgegeben werden können.

Erfindungsgemäß wird diese Aufgabe durch ein Fahrzeuginformationssystem mit den Merkmalen des Anspruchs 1 und ein Verfahren mit den Merkmalen des Anspruchs 13 gelöst. Vorteilhafte Ausgestaltungen und Weiterbildungen ergeben sich aus den abhängigen Ansprüchen.

Das erfindungsgemäße Fahrzeuginformationssystem in einem Fahrzeug umfasst eine Erfassungseinheit, durch die Betriebsdaten des Fahrzeugs erfassbar sind, sowie eine Steuereinheit, durch die in Abhängigkeit von den erfassten Betriebsdaten des Fahrzeugs Grafikdaten einer Darstellung erzeugbar sind. Dabei umfasst die Darstellung einen Hintergrundbereich und ein erstes und ein zweites perspektivisch dargestelltes Anzeigeobjekt, wobei zwischen dem ersten und dem zweiten Anzeigeobjekt ein Zwischenraum gebildet wird. Das System umfasst ferner einen Fahrzeuginformationsbildschirm, durch den die Darstellung anzeigbar ist. Dabei weist das Fahrzeuginformationssystem einen ersten Betriebsmodus und einen zweiten Betriebsmodus auf, wobei, wenn der erste Betriebsmodus aktiviert ist, das erste und zweite Anzeigeobjekt unter einem ersten Betrachtungswinkel dargestellt werden und, wenn der zweite Betriebsmodus aktiviert ist, das erste und zweite Anzeigeobjekt unter einem zweiten Betrachtungswinkel dargestellt werden. Die Fläche des Zwischenraums zwischen dem ersten und dem zweiten Anzeigeobjekt wird dabei bei einem Übergang zwischen dem ersten und dem zweiten Betriebsmodus verändert.

Dies erlaubt vorteilhafterweise, anhand der Betriebsdaten eine besonders flexibel gestaltete Informationsausgabe zu erzeugen. Insbesondere werden dabei die Anzeigeobjekte aus verschiedenen Betrachtungswinkeln dargestellt und somit die beiden Betriebsmodi klar voneinander unterschieden. Insbesondere werden die Anzeigeobjekte als dreidimensional gebildete Objekte perspektivisch dargestellt, wobei insbesondere die Anzeige mittels einer Projektion auf eine zweidimensionale Ebene der Anzeigefläche erfolgt. Den verschiedenen Betrachtungswinkeln, unter denen die dreidimensionalen virtuellen Objekte als Anzeigeobjekte dargestellt werden, sind äquivalent zu Rotationswinkeln der Anzeigeobjekte relativ zu der Ebene der zweidimensionalen Anzeigefläche des Fahrzeuginformationsbildschirms. Das heißt, bei einer Veränderung des Betrachtungswinkels kann die Darstellung so erfolgen, dass eine Rotation der Anzeigeobjekte dargestellt wird. Alternativ oder zusätzlich kann bei einer Veränderung des Betrachtungswinkels die Darstellung ferner so verändert werden, dass der virtuelle Betrachtungswinkel, aus dem ein Nutzer die Darstellung betrachtet, verändert wird.

Die Betriebsdaten des Fahrzeugs können dabei auf an sich bekannte Weise erfasst werden, insbesondere mittels Schnittstellen zu anderen Einrichtungen des Fahrzeugs, beispielsweise Sensoren. "Betriebsdaten" sind dabei im weitesten Sinne alle Daten, welche den Betrieb des Fahrzeugs betreffen. Dies können beispielsweise Eigenschaften der Bewegung des Fahrzeugs sein; ferner können Daten über die Umgebung des Fahrzeugs, etwa über den umgebenden Verkehr, umfasst sein oder es können Ausgabedaten anderer Einrichtungen, etwa eines Navigationssystems oder einer Antriebs des Fahrzeugs, erfasst werden.

Der Zwischenraum der Darstellung wird dadurch gebildet, dass die beiden Anzeigeobjekte voneinander beabstandet angeordnet sind. Der Zwischenraum umfasst dabei insbesondere den sichtbaren, das heißt nicht von den Anzeigeobjekten überdeckten Teil des Hintergrundbereichs. Insbesondere wird dabei die Darstellung so gebildet, dass die Anzeigeobjekte im Vordergrund angezeigt werden, das heißt, dass der Hintergrundbereich von den Anzeigeobjekten verdeckt wird. Der Hintergrundbereich kann dabei ebenfalls perspektivisch beziehungsweise dreidimensional dargestellt werden, oder er kann zweidimensional dargestellt werden. Ferner können Mischformen verwendet werden, bei denen einzelne Bereiche zwei- und dreidimensional dargestellt werden.

Der erste und zweite Betriebsmodus können zur Unterscheidung grundlegend verschiedener Anzeigekonzepte verwendet werden: Zum Beispiel kann der erste Betriebsmodus als "kleine Bühne", und der zweite Betriebsmodus als "große Bühne" verwendet werden. Dabei ist insbesondere vorgesehen, dass die "kleine Bühne" eine so ausgebildete Darstellung aufweist, dass die Anzeigeobjekte eine größere Fläche einnehmen, und der Zwischenraum entsprechend kleiner gebildet ist, während bei der "großen Bühne" umgekehrt die Anzeigeobjekte eine kleinere Fläche einnehmen und der von den Anzeigeobjekten gebildete Zwischenraum entsprechend größer ausgebildet ist.

Es kann vorgesehen sein, dass mehr als zwei Betriebsmodi des Fahrzeuginformationssystems aktiviert werden können. Dabei kann beispielsweise ein weiterer Betrachtungswinkel vorgesehen sein.

Ferner kann vorgesehen sein, dass die beiden Anzeigeobjekte unter jeweils verschiedenen Betrachtungswinkeln dargestellt werden. Insbesondere kann dabei vorgesehen sein, dass die beiden Anzeigeobjekte unter verschiedenen Betrachtungswinkeln dargestellt werden, wobei insbesondere die Betrachtungswinkel der Anzeigeobjekte bei einem Übergang zwischen den Betriebsmodi vertauscht werden können. Beispielsweise kann eine Drehung des einen Anzeigeobjekts nach rechts dargestellt werden, während für das andere Anzeigeobjekt eine Drehung nach links dargestellt wird.

Es kann ferner vorgesehen sein, dass zusätzlich zu einer Änderung des Betrachtungswinkels, der auch als Rotationswinkel der Anzeigeobjekte verstanden werden kann, ferner in Abhängigkeit von dem aktivierten Betriebsmodus des Fahrzeuginformationssystems eine Translation der Anzeigeobjekte relativ zur Darstellung erzeugt wird.

Dabei werden die Grafikdaten des Fahrzeuginfomationssystems so erzeugt, dass das erste und zweite Anzeigeobjekt der Darstellung unter dem ersten Betrachtungswinkel in einer Draufsicht und unter dem zweiten Betrachtungswinkel in einer Seitenansicht darstellbar sind. Dadurch werden vorteilhafterweise besonders eingängige und leicht erfassbare unterschiedliche Anzeigen verwendet. Dabei werden die Informationen aus der Draufsicht in der Seitenansicht alphanumerisch dargestellt.

Insbesondere ist dabei eine Draufsicht im Sinne der Erfindung aus einem solchen Betrachtungswinkel gebildet, dass eine besonders charakteristische Oberfläche des Anzeigeobjekts dargestellt wird. Dabei kann beispielsweise die besonders charakteristische Oberfläche so gebildet sein, dass eine Draufsicht im wesentlichen zweidimensional erscheint. Zum Beispiel kann die Draufsicht eine direkte Ansicht einer Basisfläche eines geometrischen Körpers oder einer ähnlichen Form sein. Insbesondere ist der Betrachtungswinkel dabei so gewählt, dass er in einer Richtung senkrecht zu der charakteristischen Oberfläche des dargestellten virtuellen, dreidimensionalen Anzeigeobjekts verläuft.

Die "Seitenansicht" kann insbesondere so gebildet werden, dass sie einer Veränderung des Betrachtungswinkels um etwa 90° entspricht. Insbesondere sind die Anzeigeobjekte so ausgebildet, dass sie eine aus zumindest zwei Betrachtungswinkeln klar unterscheidbare charakteristische Draufsicht und Seitenansicht aufweisen. Zum Beispiel kann auf diese Weise ein pyramidales Objekt dargestellt werden, bei welchem eine quadratische Grundfläche aus einem ersten Betrachtungswinkel sichtbar ist und aus einem zweiten Betrachtungswinkel eine dreieckige Seitenfläche. Ferner können andere geometrische Formen und/oder Mischformen verwendet werden.

Gemäß einer Ausbildung ist der Fahrzeuginformationsbildschirm ein Kombiinstrument des Fahrzeugs und das erste und das zweite Anzeigeobjekt sind unter dem ersten Betrachtungswinkel als Rundinstrumente darstellbar. Die Anzeige erfolgt dabei vorteilhafterweise im direkten Bereich des Blickwinkels des Fahrers, sodass eine besonders leichte Erfassbarkeit der Darstellung erreicht wird. Ferner handelt es sich bei der Darstellung von Rundinstrumenten um eine Nachahmung analoger, weit verbreiteter Instrumente zur Ausgabe von Fahrzeuginformationen.

Ein "Rundinstrument" im Sinne der Erfindung umfasst dabei eine im wesentlichen kreis- oder bogenförmig ausgebildete Skala sowie ein Zeigerelement, durch welches ein bestimmter Wert eines durch das Rundinstrument angezeigten Parameters anhand einer Position entlang der Skala angezeigt wird. Derartige Darstellungen sind im Fahrzeugbereich typischerweise in Kombinstrumenten zu finden und dem Nutzer daher vertraut.

Gemäß einer Weiterbildung ist durch die Erfassungseinheit ferner ein Umschaltsignal empfangbar und in Abhängigkeit von dem Umschaltsignal ist der erste oder zweite Betriebsmodus aktivierbar, wobei bei dem Übergang zwischen dem ersten und dem zweiten Betriebsmodus eine Übergangsanimation erzeugbar und ausgebbar ist. Auf diese Weise kann die Wahl zwischen erstem und zweitem Betriebsmodus besonders vorteilhaft erfolgen.

Das Umschaltsignal kann dabei auf an sich bekannte Weise erfasst werden, insbesondere anhand einer Bedienhandlung eines Nutzers, zum Beispiel einer Betätigung eines Schalters, einer Geste oder einer Spracheingabe, oder anhand eines automatisch von einer weiteren Einrichtung des Fahrzeugs empfangenen Signals, durch das beispielsweise eine automatische Umschaltung zwischen dem ersten und dem zweiten Betriebsmodus vorgenommen werden kann. Zum Beispiel kann eine automatische Umschaltung erfolgen, wenn eine bestimmte Information angezeigt werden soll, die etwa eine bestimmte Gestaltung der Darstellung erfordert. Ferner kann die Umschaltung zwischen erstem und zweitem Betriebsmodus automatisch erfolgen, wenn eine bestimmte Fahrsituation detektiert wird, zum Beispiel wenn bei einem Wechsel zwischen manuellem und teilweise oder vollständig automatisch durchgeführtem Fahren die Aufmerksamkeit des Fahrers auf andere Informationen gelenkt werden soll als zuvor.

Ferner kann vorgesehen sein, dass beim Umschalten zwischen dem ersten und dem zweiten Betriebsmodus die Übergangsanimation auf verschiedene Weise erzeugt wird, wobei insbesondere ein kontinuierlicher Übergang von dem ersten Betrachtungswinkel zu dem zweiten Betrachtungswinkel dargestellt wird. Ferner kann die Übergangsanimation die Veränderung des durch die beiden Anzeigeobjekte gebildeten Zwischenraums beziehungsweise der damit veränderten sichtbaren Fläche des Hintergrundbereichs der Darstellung berücksichtigen. Insbesondere kann dabei ein Übergang von einer "kleinen Bühne" zu einer "großen Bühne" beziehungsweise umgekehrt dargestellt werden.

Gemäß einer Ausbildung ist bei dem Übergang von dem ersten zu dem zweiten Betriebsmodus die Darstellung so erzeugbar, dass die Fläche des Zwischenraums vergrößerbar ist, wobei eine Rotation des ersten und zweiten Anzeigeobjekts darstellbar ist. Dadurch kann vorteilhafterweise durch einen Übergang von dem ersten zu dem zweiten Betriebsmodus die für eine Darstellung im Hintergrundbereich der Darstellung verfügbare Fläche vergrößert werden.

Umgekehrt kann in diesem Fall die Fläche des Zwischenraums verkleinert werden, wenn ein Übergang von dem zweiten zu dem ersten Betriebsmodus vorgenommen wird. In diesem Fall kann in dem ersten Betriebsmodus eine größere Fläche zur Darstellung von auszugebenden Daten im Bereich der Anzeigeobjekte zur Verfügung stehen.

Es ist in diesem Fall vorgesehen, dass zum Verändern des Betrachtungswinkels relativ zu den Anzeigeobjekten eine Rotation der Anzeigeobjekte dargestellt wird.

Gemäß einer weiteren Ausbildung werden die Grafikdaten so erzeugt, dass der Hintergrundbereich der Darstellung in Abhängigkeit von dem Betriebsmodus erzeugbar ist. Dadurch kann vorteilhafterweise ausgenutzt werden, dass für die Anzeige von Fahrzeuginformationen im Hintergrundbereich in Abhängigkeit von dem aktivierten Betriebsmodus eine unterschiedliche Fläche zur Verfügung steht.

Insbesondere kann in Abhängigkeit von dem Betriebsmodus ein Ausschnitt einer im Hintergrundbereich dargestellten Anzeige verändert werden. Ferner kann eine Veränderung eines Vergrößerungsfaktors erfolgen, zum Beispiel im Sinne eines veränderten Zooms.

Gemäß einer Weiterbildung umfassen die erfassten Betriebsdaten eine Geschwindigkeit, Umdrehungszahl, Informationen über verfügbare Anwendungen und/oder einen verfügbaren Energievorrat. Die Betriebsdaten sind zumindest teilweise anhand des ersten und zweiten Anzeigeobjekts ausgebbar. Dadurch können vorteilhafterweise besonders relevante Fahrzeuginformationen angezeigt werden.

Insbesondere werden die Anzeigeobjekte dazu genutzt, besonders zentrale Daten für den Betrieb und die Fahrt des Fahrzeugs anzuzeigen, beispielsweise die Geschwindigkeit und/oder die Umdrehungszahl des Motors. Eine solche Darstellung entspricht ferner typischerweise den Gewohnheiten eines Fahrers, der an herkömmliche Kombiinstrumente gewöhnt ist. Die Verwendung einer vertrauten Art der Anzeige erleichtert das Erfassen der ausgegebenen Daten. Informationen über verfügbare Anwendungen können zum Beispiel solche von einem Rechensystem ausführbaren Anwendungen und Programme umfassen, die potentiell ausgeführt werden können und/oder die derzeit ausgeführt werden. Dabei kann insbesondere eine Anzeige so erfolgen, dass verschiedene Anwendungen mit verschiedenem Status unterschieden werden können, dass Gruppen von Anwendungen erfasst werden können und/oder dass eine Bedienung der Anwendungen vorgenommen werden kann. Ferner können Ausgabedaten von Anwendungen angezeigt werden. Bei der Anzeige eines verfügbaren Energievorrats können verschiedene Darstellungsformen verwendet werden, zum Beispiel ein Skalenelement, an dem anhand der Position eines weiteren Zeigerelements ein bestimmter Wert angezeigt wird. Der Energievorrat kann sich dabei zum Beispiel auf einen Treibstofftank und/oder einen elektrischen Energiespeicher beziehen.

Gemäß einer Ausbildung weisen das erste und zweite Anzeigeobjekt jeweils eine gleiche Grundform auf. Dadurch kann vorteilhafterweise erreicht werden, dass das erste und zweite Anzeigeobjekt in einer gleichartigen Weise erzeugt werden, und eine einheitliche Darstellung ermöglicht wird. Dabei kann insbesondere die Grundform eine geometrische Form sein, die beide Anzeigeobjekte aufweisen, wobei ferner eine Gestaltung der Grundform, etwa einer dargestellten Oberfläche, bei den unterschiedlichen Anzeigeobjekten verschieden gebildet werden kann.

Gemäß einer weiteren Ausbildung umfasst die Grundform des ersten und zweiten Anzeigeobjekts eine Halbkugeloberfläche. Eine solche Grundform weist vorteilhafterweise besonders eingängige und leicht erfassbare Charakteristika einer Draufsicht und einer Seitensicht auf, wobei die Draufsicht zum Beispiel als direkte Ansicht der kreisförmigen Rundfläche, sowie die Seitenansicht als Ansicht der als Halbkreis ausgebildeten Seite, definiert sein kann.

Zudem ermöglichst eine solche Grundform eine Ausgabe von Fahrzeuginformationen anhand einer Rundinstrumentendarstellung, insbesondere bei der Draufsicht auf die kreisförmige Grundfläche der Halbkugel. Ferner kann eine Rotationsachse so festgelegt werden, dass eine halbkreisförmige, seitliche Begrenzung in der Draufsicht durch den Umfang der kreisförmigen Grundfläche, und bei der Seitenansicht durch die kreisbogenförmige Wölbung der Oberfläche, erzeugt wird. Ferner kann auf diese Weise der perspektivische Effekt der Darstellung besonders deutlich erzeugt werden, da bei der Draufsicht auf die kreisförmige Grundfläche ein im wesentlichen zweidimensionaler Eindruck entsteht, während bei einer Rotation die Veränderung der dargestellten Ansicht besonders deutlich hervortritt. Die Draufsicht und Seitenansicht können dabei so dargestellt werden, dass die Betrachtungswinkel sich um etwa 90° voneinander unterscheiden, wobei kleinere oder größere Winkel verwendet werden können, insbesondere, um bei der Seitenansicht eine teilweise Ansicht der kreisrunden Grundfläche unter einem vorzugsweise spitzen Winkel zu ermöglichen. Zur Anzeige von Fahrzeuginformationen anhand der so gebildeten Anzeigeobjekte kann die Oberfläche der Halbkugel verwendet werden, insbesondere kann eine Rotation der Halbkugel zur Darstellung einer Veränderung eines dargestellten Wertes verwendet werden.

Die Halbkugel kann dabei verzerrt dargestellt sein, zum Beispiel als Teil eines Ellipsoids. Ferner muss die Halbkugel nicht notwendigerweise genau eine Hälfte einer Kugel umfassen, sondern es kann ein kleinerer oder größerer Anteil umfasst sein. Vorteilhafterweise ist hier eine rotationssymmetrische Grundform vorgesehen.

Gemäß einer Weiterbildung umfasst die Grundform des ersten und zweiten Anzeigeobjekts einen Außenring, einen Innenring, eine runde Scheibe und/oder eine Zeigerkappe. Damit stehen vorteilhafterweise verschiedene Bereiche zur Verfügung, um unterschiedliche Fahrzeuginformationen, insbesondere auch unterschiedliche Klassen von Fahrzeuginformationen, auszugeben.

Insbesondere kann eine Grundform, die eine Halbkugeloberfläche umfasst, für die Darstellung von Anzeigeobjekten dieser Art verwendet werden. In diesem Fall kann etwa die runde Scheibe anhand der kreisförmigen Grundfläche der Halbkugel ausgeprägt sein. Ferner kann eine Zeigerkappe vorgesehen sein, die im Mittelpunkt der runden Scheibe angeordnet ist und eine Zeigerkappe eines analogen Rundelements darstellt. Ferner können ringförmige Strukturen definiert sein, beispielsweise anhand von Abschnitten der Halbkugelform.

Gemäß einer Ausbildung umfasst das erste und/oder zweite Anzeigeobjekt ein Zeigerelement, wobei das Zeigerelement anhand eines Lichteffekts darstellbar ist. Dadurch kann vorteilhafterweise eine besonders deutliche Anzeige mittels des Zeigerelements erreicht werden.

Insbesondere ist das Zeigerelement so ausgebildet, dass seine Position und Ausrichtung relativ zu einem weiteren Element, insbesondere einem Skalenelement, der Ausgabe eines Wertes eines Parameters dient. Insbesondere kann das Zeigeelement so angeordnet sein, dass es anhand einer Rotation um einen Punkt im Mittelpunkt einer dargestellten runden Scheibe oder eines Kreises oder Kreisbogens als Skala einen Wert anzeigt.

Der Lichteffekt kann dabei nach an sich bekannter Weise gebildet werden, zum Beispiel kann dargestellt werden, dass ein Lichtstrahl entlang des Zeigerelements verläuft. Beispielsweise kann das Zeigerelement als Laserstrahl dargestellt werden.

Gemäß einer weiteren Ausbildung ist durch eine Aktivierungseinheit ein Aktivierungssignal empfangbar, wobei in Abhängigkeit von dem Aktivierungssignal eine Aktivierungsanimation erzeugbar und durch den Fahrzeuginformationsbildschirm ausgebbar ist. Dadurch kann vorteilhafterweise der Ablauf eines Aktivierungsvorgangs ausgegeben werden.

Insbesondere kann anhand des Aktivierungssignals das Fahrzeuginformationssystem angeschaltet beziehungsweise in Betrieb genommen werden. Die Erfassung des Aktivierungssignals erfolgt auf an sich bekannte Weise, zum Beispiel durch Schließen eines Schlüssels in einem Schloss, einem ähnlichen Konzept ohne Schloss, sowie anhand einer Steuereinheit, welche das Aktivierungssignal erzeugt. Insbesondere kann das Aktivierungssignal empfangen werden, wenn das Fahrzeug gestartet wird, wenn ein Einsteigen des Fahrers detektiert wird, oder wenn eine Bedienhandlung erfasst wird.

Gemäß einer Ausgestaltung umfasst die Aktivierungsanimation eine dynamische Darstellung des ersten und zweiten Anzeigeobjekts, wobei eine Bewegung eines Elements des ersten und/oder zweiten Anzeigeobjekts relativ zu weiteren Elementen des ersten und zweiten Anzeigeobjekts darstellbar ist. Dadurch kann vorteilhafterweise eine dynamische Ausgabe der Aktivierungsanimation erzeugt und ausgegeben werden.

Durch die Ausgabe der Aktivierungsanimation kann etwa ein "Aufwachszenario" ausgegeben werden. Durch das Aufwachszenario kann beispielsweise ein schrittweises Auftauchen von Elementen der Darstellung, insbesondere der Anzeigeelemente und der Darstellung im Hintergrundbereich, angezeigt werden. Die Aktivierungsanimation ist dabei vorteilhafterweise so ausgebildet, dass die Darstellung durch eine dynamische Entwicklung schrittweise an Komplexität zunimmt, so dass einem Nutzer ermöglicht wird, die einzelnen Aspekte der Darstellung schrittweise zu erfassen.

Dabei kann vorgesehen sein, dass als initialer Betriebsmodus der erste oder zweite Betriebsmodus aktiviert ist. Ferner kann die Aktivierungsanimation einen Übergang zwischen den Betriebsmodi umfassen beziehungsweise eine Darstellung, insbesondere der Anzeigeelemente, durch welche die verschiedenen Betrachtungswinkel der Betriebsmodi erkennbar sind.

Bei dem erfindungsgemäßen Verfahren zum Betreiben eines Fahrzeuginformationssystems in einem Fahrzeug werden Betriebsdaten des Fahrzeugs erfasst und es werden in Abhängigkeit von den erfassten Betriebsdaten des Fahrzeugs Grafikdaten einer Darstellung erzeugt. Dabei umfasst die Darstellung einen Hintergrundbereich und ein erstes und ein zweites perspektivisch dargestelltes Anzeigeobjekt, wobei zwischen dem ersten und dem zweiten Anzeigeobjekt ein Zwischenraum gebildet wird. Die Darstellung wird angezeigt. Dabei weist das Fahrzeuginformationssystem einen ersten Betriebsmodus und einen zweiten Betriebsmodus auf, wobei, wenn der erste Betriebsmodus aktiviert ist, das erste und zweite Anzeigeobjekt unter einem ersten Betrachtungswinkel dargestellt werden und, wenn der zweite Betriebsmodus aktiviert ist, das erste und zweite Anzeigeobjekt unter einem zweiten Betrachtungswinkel dargestellt werden. Dabei wird die Fläche des Zwischenraums zwischen dem ersten und dem zweiten Anzeigeobjekt bei einem Übergang zwischen dem ersten und dem zweiten Betriebsmodus verändert.

Das erfindungsgemäße Verfahren ist insbesondere ausgebildet, das vorstehend beschriebene erfindungsgemäße Fahrzeuginformationssystem zu betreiben. Das Verfahren weist somit dieselben Vorteile auf wie das erfindungsgemäße Fahrzeuginformationssystem.

Das erfindungsgemäße Verfahren kann insbesondere verwendet werden, um eine Anzeige eines frei programmierbaren Kombiinstruments zu erzeugen und damit Fahrzeuginformationen auszugeben.

Bei einer Ausbildung des erfindungsgemäßen Verfahrens werden das erste und das zweite Anzeigeobjekt unter dem ersten Betrachtungswinkel als Rundinstrumente dargestellt. Dadurch kann vorteilhafterweise die Ausgabe von Fahrzeuginformationen so erfolgen, wie dies typischerweise mittels analoger Rundinstrumente geschieht. Typischerweise ist Nutzern eines Fahrzeugs, insbesondere einem Fahrer, das Erfassen von Werten anhand eines solchen Rundinstruments vertraut.

Die Erfindung wird nun anhand von Ausführungsbeispielen mit Bezug zu den Zeichnungen erläutert.
- Figur 1: zeigt ein Fahrzeug mit einem Ausführungsbeispiel des erfindungsgemäßen Fahrzeuginformationssystems,
- Figuren 2A bis 2D: zeigen ein Ausführungsbeispiel einer durch das erfindungsgemäße Fahrzeuginformationssystem erzeugten Aktivierungsanimation,
- Figuren 3A bis 3E: zeigen ein Ausführungsbeispiel eines Außenrings einer mit dem erfindungsgemäßen Verfahren erzeugten Darstellung,
- Figuren 4A bis 4C: zeigen ein Ausführungsbeispiel eines Innenrings einer mit dem erfindungsgemäßen Verfahren erzeugten Darstellung,
- Figur 5: zeigt ein Ausführungsbeispiel einer Zeigerkappe einer mit dem erfindungsgemäßen Verfahren erzeugten Darstellung und
- Figuren 6A und 6B: zeigen ein Ausführungsbeispiel einer mit dem erfindungsgemäßen Verfahren erzeugten Darstellung mit einem Hintergrundbereich für die Fälle einer "kleinen Bühne" und einer "großen Bühne".

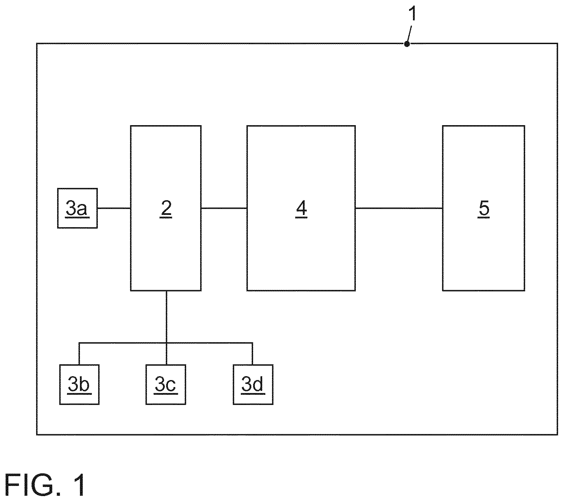

Mit Bezug zu Figur 1 wird ein Fahrzeug mit einem Ausführungsbeispiel des erfindungsgemäßen Fahrzeuginformationssystems erläutert.

Ein Fahrzeug 1 umfasst eine Erfassungseinheit 2, die mit einer Aktivierungseinheit 3a sowie weiteren Einrichtungen 3b, 3c, 3d des Fahrzeugs 1 gekoppelt ist. Es umfasst ferner eine Steuereinheit 4, die mit der Erfassungseinheit 2 und einem Fahrzeuginformationsbildschirm 5 gekoppelt ist. Der Fahrzeuginformationsbildschirm 5 ist in dem Ausführungsbeispiel ein Display eines Kombiinstruments des Fahrzeugs 1.

Die Aktivierungseinheit 3a umfasst in dem Ausführungsbeispiel einen Türsensor 3a, durch den ein Schließen der Fahrertür des Fahrzeugs 1 erfassbar ist.

Mit Bezug zu Figur 1 wird ein Ausführungsbeispiel des erfindungsgemäßen Verfahrens erläutert. Dabei wird von dem oben erläuterten erfindungsgemäßen System in dem Fahrzeug 1 ausgegangen.

Die Erfassungseinheit 2 ist dazu eingerichtet, auf an sich bekannte Weise Daten von den Einrichtungen 3a, 3b, 3c, 3d zu erfassen, wobei insbesondere Nutzereingaben sowie Betriebsdaten des Fahrzeugs 1 erfasst werden. Dabei wird insbesondere ein Aktivierungssignal von dem Türsensor 3a empfangen, wenn die Fahrertür des Fahrzeugs 1 geschlossen wird. Zu den Betriebsdaten, die durch die Erfassungseinheit 2 erfasst werden, gehören bei dem Ausführungsbeispiel ferner Bewegungsparameter des Fahrzeugs 1, das heißt Geschwindigkeit, Richtung und Beschleunigung, Einstellungen des Fahrwerks, Daten eines Navigationssystems, insbesondere eine Position und eine geplante Route, sowie Ausgabedaten eines Rechnersystems. Nutzereingaben können bei dem Ausführungsbeispiel über die Stellung eines Schalthebels erfasst werden. In weiteren Ausführungsbeispielen können alternativ oder zusätzlich andere Daten auf verschiedene Weisen erfasst werden.

Anhand der erfassten Daten erzeugt die Steuereinheit 4 Grafikdaten einer Darstellung 10, die an den Fahrzeuginformationsbildschirm 5 übertragen und durch diesen ausgegeben werden. Die Grafikdaten werden dabei ferner in Abhängigkeit von einem Betriebsmodus des Fahrzeuginformationssystems erzeugt, wobei insbesondere ein erster und ein zweiter Betriebsmodus unterschieden werden. Diese Betriebsmodi können durch eine Eingabe des Nutzers aktiviert werden, im dargestellten Ausführungsbeispiel durch entsprechendes Betätigen des Schalthebels, oder die Aktivierung kann automatisch erfolgen. Beispielsweise ist bei dem Beispiel vorgesehen, dass automatisch ein passender Betriebsmodus anhand von Daten über die Fahrsituation gewählt wird. Je nachdem, welche Informationen in der aktuellen Fahrsituation für den Fahrer besonders relevant sind, werden die geeigneten Anzeigeelemente besonders hervorgehoben dargestellt. In weiteren Ausführungsbeispielen können alternativ oder zusätzlich andere Möglichkeiten zur Aktivierung des Betriebsmodus vorgesehen sein.

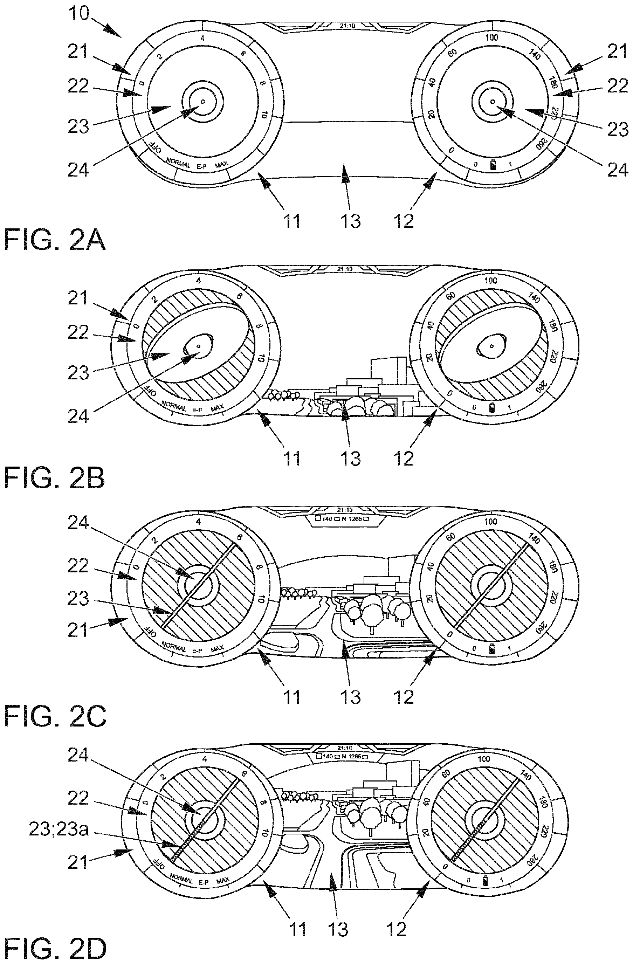

Mit Bezug zu den Figuren 2A bis 2D wird ein Ausführungsbeispiel einer Aktivierungsanimation erläutert. Dabei wird von dem oben mit Bezug zu Figur 1 erläuterten erfindungsgemäßen Fahrzeuginformationssystem und dem erfindungsgemäßen Verfahren zum Betreiben desselben ausgegangen.

Die im Folgenden beschriebene Animation startet mit einem Aufwachszenario, in welchem sich ein Logo, beispielsweise eine Darstellung eines Fahrzeugs oder eines Fahrzeughersteller-Logos in zwei einzelne Anzeigeobjekte 11, 12 transformiert, die insbesondere als Kreiselemente oder Rundinstrumente dargestellt werden und nachfolgend als "Tuben" 11, 12 bezeichnet werden. Bei dem Ausführungsbeispiel werden die Rundinstruments als dreidimensionale Objekte dargestellt, die nach der Grundform einer Halbkugelform gebildet sind. Die Tuben 11, 12 werden im Vordergrund vor einem Hintergrundbereich 13 angezeigt. Bei dem Aufwachszenario ist in dem Ausführungsbeispiel vorgesehen, dass ein Aktivierungssignal von dem Türsensor 3a empfangen wird und das Fahrzeuginformationssystem aktiviert wird. Zunächst erscheint auf dem Fahrzeuginformationsbildschirm 5, hier das Display des Kombiinstruments des Fahrzeugs 1, zunächst ein Logo des Fahrzeugherstellers, eine Darstellung eines Fahrzeugs und/oder eine andere Darstellung. Anschließend wird eine Animation so erzeugt, dass ein Übergang zu der in Figur 2A gezeigten Darstellung 10 ausgegeben wird.

In weiteren Ausführungsbeispielen kann vorgesehen sein, dass ein anderes Ereignis zum Empfangen des Aktivierungssignals führt, beispielsweise ein Starten des Fahrzeugs 1, etwa mittels eines Schlüssels oder eines Schalters.

Die Figuren 2A bis 2D zeigen beide Tuben 11, 12 in einer Frontdarstellung. Dies entspricht in dem Ausführungsbeispiel der Darstellung 10 für den Fall, dass der erste Betriebsmodus des Fahrzeuginformationssystems aktiviert ist, was hier insbesondere nach dem Start des Fahrzeugs 1 stets der Fall ist.

Eine runde Scheibe 23, die eine innere, runde Fläche der Tube 11,12 bildet, dreht sich um eine Achse und kommt nach einer 90°-Drehung zum Stehen. Die runde Scheibe 23 wird nunmehr in einer Seitenansicht so dargestellt, dass sie als längliches Element erscheint. Die Drehachse verläuft in eine Richtung, welche der initialen Richtung von Zeigern 23a entspricht. Der Fahrer wird dadurch visuell auf den Ort und die Startpositionen der Zeiger 23a vorbereitet. In einem weiteren Schritt nach der 90°-Drehung der runden Scheibe 23 wird auf dem Verlauf der Achse, das heißt entlang der dargestellten Kante der runden Scheibe 23, ein virtueller Zeiger 23a eingeblendet und farblich abgehoben. Somit wird die Aufmerksamkeit des Fahrers durch den vorhergehenden Ablauf auf die Position der Tuben 11, 12 und die Anfangsposition der Zeiger 23a gelenkt. Der Zeiger 23a wird insbesondere dadurch dargestellt, dass ein Lichteffekt erzeugt wird, durch den ein Lichtstrahl entlang der Kante der runden Scheibe 23 verläuft und den Zeiger 23a bildet.

Dieser Zustand wird als "kleine Bühne" beschrieben. Das Feature hier liegt in einer visuellen Unterstützung des Fahrgefühls bei Beschleunigung und Bremsvorgang. Insbesondere dienen die Tuben 11, 12 dabei der Ausgabe von Daten über die Geschwindigkeit des Fahrzeugs 1 sowie die Drehzahl des Fahrzeugmotors.

Wahlweise kann der Nutzer in eine Seitenansicht, auch "große Bühne" genannt, wechseln. Dies entspricht in dem Ausführungsbeispiel einem zweiten Betriebsmodus des Fahrzeuginformationssystems. Ein Wechsel kann hier durch Betätigen des Schalthebels erfolgen, was durch die Erfassungseinheit 2 erfasst wird. Insbesondere kann dadurch ein Übergang vom ersten zum zweiten Betriebsmodus erzeugt werden. Dabei transformieren sich beide Tuben 11, 12 zur Seite, wobei hier eine Rotation um eine Achse dargestellt wird, die im Wesentlichen senkrecht zum Abstand der Tuben 11, 12 zueinander verläuft. Dabei entsteht eine größere Informationsfläche zwischen den Tuben. Zum Beispiel kann hier eine Ausgabe von Ausgabedaten eines Navigationssystems angezeigt werden.

Das Feature der Seitenansicht ist die Integration einer zusätzlichen App-Funktion, die es ermöglicht die Apps des eigenen Smartphones auf dem Display zu nutzen. Dabei werden insbesondere weiterhin die wesentlichen Daten der Rundinstrumentendarstellung im ersten Betriebsmodus ausgegeben.

Wie in den Figuren 2A bis 2D gezeigt, bestehen die Tuben jeweils aus den folgenden Einzelelementen: Einem Außenring 21, einem Innenring 22, einer runden Scheibe 23 sowie einer Zeigerkappe 24. Im Folgenden sollen die beschriebenen Tuben-Einzelelemente detailliert erläutert werden.

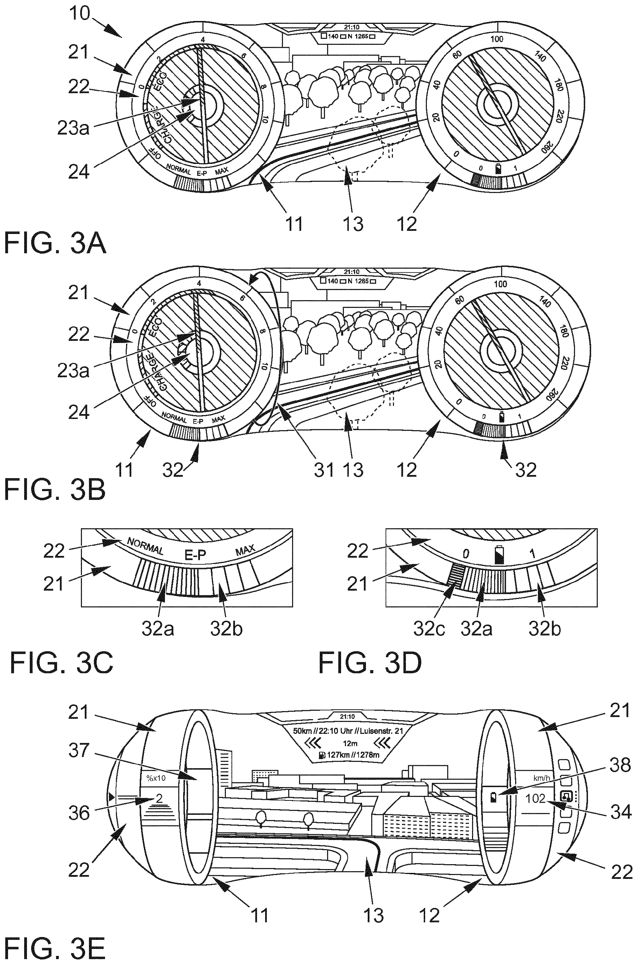

Mit Bezug zu den Figuren 3A bis 3E wird ein Ausführungsbeispiel eines Außenrings einer mit dem erfindungsgemäßen Verfahren erzeugten Darstellung 10 erläutert. Dabei wird von dem oben mit Bezug zu Figur 1 erläuterten erfindungsgemäßen Fahrzeuginformationssystem und dem erfindungsgemäßen Verfahren zum Betrieben desselben ausgegangen.

Nachfolgend wird eine Funktionsbeschreibung des Außenrings 21 in der Frontdarstellung des ersten Betriebsmodus gegeben. Der Außenring ist dabei als Ring um die Grundfläche der Halbkugelform der jeweiligen Tube 11, 12 gebildet.

Die Hauptfunktion des Außenrings 21 in der Frontdarstellung besteht in der Visualisierung des Brems- und Beschleunigungsvorganges. Dabei ist vorgesehen, dass der Außenring 21 bei Beschleunigung nach vorne kippt und sich beim Bremsvorgang wieder in die Ausgangsposition bewegt. Dadurch wird dem Fahrer eine Rückmeldung über die Beschleunigung des Fahrzeugs 1 ausgegeben. In Figur 3B ist durch einen Pfeil 31 die Kippbewegung angedeutet.

Darüber hinaus werden Füllzustände dargestellt, was in dem Ausführungsbeispiel als Tank-, Batterie- und E-P-Anzeige erfolgt. Dies erfolgt anhand einer Füllzustands-Anzeige 32, deren optische Merkmale nachfolgend erläutert werden, wobei insbesondere auf die Figuren 3C und 3D Bezug genommen wird.

Die Füllzustands-Anzeige 32 wird als Glaskörper visualisiert, in dem eine Flüssigkeit den aktuellen Füllzustand anzeigt. Dabei wird ein gefüllter Bereich 32a gegenüber einem leeren Bereich 32b hervorgehoben, etwa mittels einer bestimmten Farbe, Struktur oder Intensität. Ferner kann, wie in Figur 3D gezeigt, ein kritischer Bereich 32c ausgebildet sein, etwa ein Reservebereich. Insbesondere kann mittels der Füllstands-Anzeige 32 nicht nur ein Energieeinhalt oder Füllstand angezeigt werden, sondern es können nach an sich bekannter Weise auch andere Werte von Parametern angezeigt werden, insbesondere relativ zu einem Maximalwert.

Nachfolgend wird eine Funktionsbeschreibung des Außenrings 21 in der Seitendarstellung des zweiten Betriebsmodus gegeben.

Bei dem Ausführungsbeispiel wird bei einem Übergang vom ersten zum zweiten Betriebsmodus des Fahrzeuginformationssystems zu einer Seitendarstellung der Tuben 11, 12 gewechselt. Dabei wird insbesondere ein kontinuierlicher Übergang visualisiert, bei dem die Tuben 11, 12 um einen Winkel von ungefähr 90° rotieren. Insbesondere rotieren die Tuben 11,12 dabei in entgegengesetzte Richtungen.

Das eigentliche Feature der Seitendarstellung besteht darin, dass sich der Fahrer auf ein Display konzentrieren kann, das heißt, dass der zwischen den Tuben 11, 12 gebildete Zwischenraum größer ist gegenüber der Darstellung 10 im ersten Betriebsmodus, sodass ein größerer Teil der Fläche des Hintergrundbereichs 13 sichtbar ist. Der Fahrer muss nicht mehr zwischen mehreren Fahrzeug-Displays wählen und kann sich auf die eigentliche Fahraufgabe konzentrieren. Insbesondere steht in diesem Fall genug Platz im Hintergrundbereich 13 zur Verfügung für Anzeigen verschiedener Einrichtungen, die sonst auf anderen Fahrzeug-Displays ausgegeben werden.

In der Seitendarstellung werden alle Informationen aus der Frontdarstellung übernommen. Geschwindigkeitsanzeige sowie die Drehzahl erscheinen auf einem zusätzlichen Display, das im gezeigten Beispiel als Text-Anzeigebereich 34, 36 ausgebildet ist, auf dem Außenring 21.

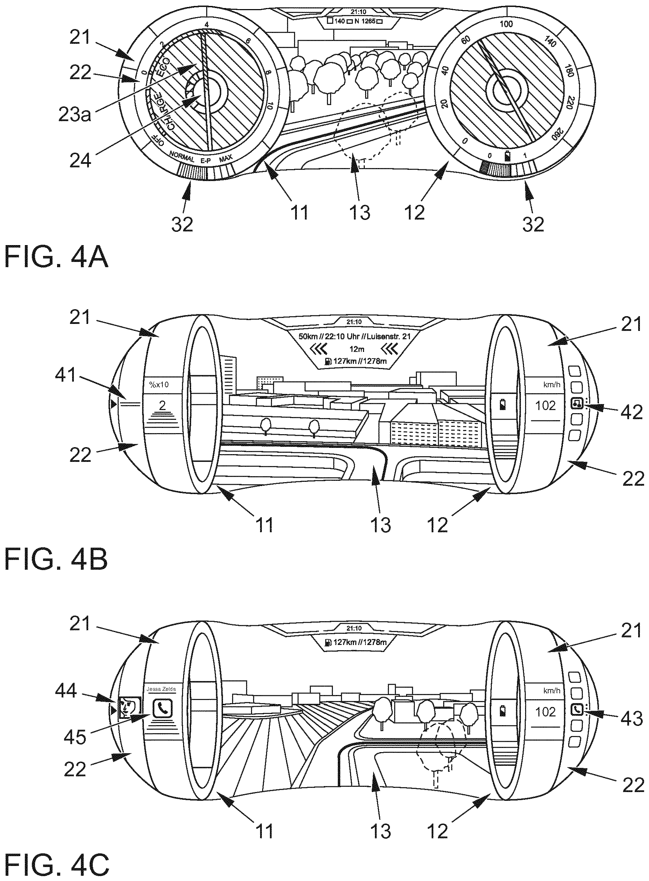

Mit Bezug zu den Figuren 4A bis 4C wird ein Ausführungsbeispiel eines Innenrings einer mit dem erfindungsgemäßen Verfahren erzeugten Darstellung 10 erläutert. Dabei wird von dem oben mit Bezug zu Figur 1 erläuterten erfindungsgemäßen Fahrzeuginformationssystem und dem erfindungsgemäßen Verfahren zum Betreiben desselben ausgegangen.

Nachfolgend wird eine Funktionsbeschreibung des Innenrings 22 in der Frontdarstellung des ersten Betriebsmodus gegeben. Der Innenring wird dabei insbesondere als relativ zum Außenring innenliegender konzentrischer Bereich der Halbkugelform gebildet.

Die Hauptfunktion des Innenrings 22 in der Frontdarstellung besteht in der Visualisierung der Drehzahl und Geschwindigkeit. Dabei ist auf dem Innenring 22 eine Skala dargestellt und der jeweilige Wert kann anhand der Position der Zeiger 23a abgelesen werden.

Nachfolgend wird eine Funktionsbeschreibung des Innenrings 22 in Seitendarstellung gegeben.

Das Feature der Seitendarstellung besteht darin, dass die Apps des Smartphones des Nutzers (wie zum Beispiel: Telefonbucheinträge, Musik, Kalender, Wetterinformationen, Navigation etc...) anhand von Icons auf der Tube 11, 12 mit angezeigt werden. Dazu ist in dem Ausführungsbeispiel vorgesehen, dass eine der Einrichtungen 3a, 3b, 3c, 3d des Fahrzeugs 1 eine Schnittstelle zu dem Smartphone des Nutzers aufweist und mittels einer datentechnischen Verbindung Informationen ausgetauscht werden können. Insbesondere kann auf diese Weise auf Apps des Smartphones zugegriffen werden.

In weiteren Ausführungsbeispielen kann alternativ oder zusätzlich zu dem Smartphone ein anderes Nutzergerät vorgesehen sein, etwa ein tragbarer Computer, ein Tablet-Computer, eine Smartwatch oder ein andere Gerät. Ferner kann eine Datenverbindung zu einer externen Einrichtung, etwa einem externen Server, hergestellt werden und auf die externe Einrichtung analog zu dem Smartphone im dargestellten Beispiel zugegriffen werden.

Figur 4B zeigt, wie eine gewünschte App auf der rechten Tube 12 ausgewählt wird und auf der linken Tube 11 anhand von Text, Bild, Fotos, Alben, Sound/Stimmpegel dargestellt wird. Dabei ist ein App- Auswahlbereich 42, 43 vorgesehen, der im Bereich des inneren Rings 22 der rechten Tube 12 ausgebildet ist und eine Vielzahl von Symbolen umfasst, die einzelne Apps repräsentieren und wobei eine ausgewählte App hervorgehoben dargestellt wird. Die Darstellung einer Ausgabe der jeweils ausgewählten App erfolgt in einem App-Ausgabebereich 41, 44, der im Bereich des inneren Rings 22 der linken Tube 11 ausgebildet ist.

Mit Bezug zu Figur 4C soll das Funktionsprinzip am konkreten Beispiel einer Telefon-App näher erläutert werden.

In einem ersten Schritt wird mit Hilfe eines Drehreglers an einem Lenkrad des Fahrzeugs 1 die Telefon-App ausgewählt. Eine Liste der verfügbaren Apps und eine Anzeige der derzeit ausgewählten App wird auf dem Innenring 22 der rechten Tube 12 in einem App-Auswahlbereich 42, 43 dargestellt. Ferner wird die ausgewählte App auf der linken Tube 11 detaillierter angezeigt, wobei dafür insbesondere der App-Ausgabebereich 41, 44, 45 verwendet wird, der sich im dargestellten Ausführungsbeispiel über den Innenring 22 und den Außenring 21 erstreckt. In diesem Beispiel werden sämtliche Kontakte anhand von Fotos dargestellt. Eine gewünschte Person wird ausgewählt, alle anderen Kontakte werden ausgeblendet und der Anruf wird gestartet. Im Bereich der linken Tube 11 erscheint anschließend ein "Stimmpegel", welcher die Lautstärke anzeigt, etwa im Inneren des Außenrings 21 oder in einem anderen Bereich der Tube 11.

Nachfolgend wird eine Funktionsbeschreibung der runden Scheibe 23 gegeben.

Soll eine Fahrt durchgeführt werden, wird bei dem Ausführungsbeispiel mit dem Zustand "Tür zu" in der Frontansicht der Tuben 11, 12 eine Transformation der runden Scheibe 23 in einen Zeiger 23a durchgeführt. Die runde Scheibe 23 besteht aus insgesamt zwei übereinander liegenden Elementen, die sich bei einer 90° Drehung zu einem Zeigerelement 23a vereinen. Von der Mitte der runden Scheibe 23 aus wird dabei ein Laserstrahl zu den Anzeigewerten gelenkt.

Bei der Bewegung des Zeigers 23a zu dem jeweiligen Anzeigewert, werden alle Anzeigewerte rechts und links neben dem Zeiger nach "unten gedrückt", das heißt, auf der Skala des Außenrings 21 wird der Wert bei der Position des Zeigers 23a hervorgehoben, etwa durcherhöhte Intensität und/oder Farbe, und die umliegenden Werte werden in anderer Weise gekennzeichnet, etwa durch eine geringere Intensität und/oder schwächere Farbe.

In der Seitendarstellung verschwinden die Zeiger 23a. Hier treten die oben erläuterten Displays in Seitenansicht zur Geschwindigkeits- und Drehzahlanzeige in den Vordergrund, zum Beispiel die Text-Anzeigebereiche 34, 36.

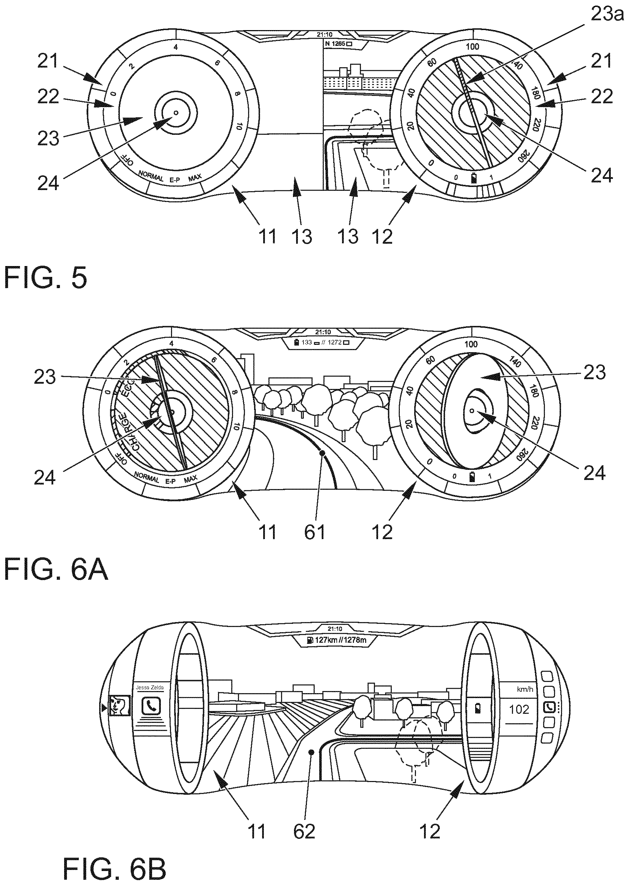

Mit Bezug zu Figur 5 wird ein Ausführungsbeispiel einer Zeigerkappe einer mit dem erfindungsgemäßen Verfahren erzeugten Darstellung 10 erläutert. Dabei wird von dem oben mit Bezug zu Figur 1 erläuterten erfindungsgemäßen Fahrzeuginformationssystem und dem erfindungsgemäßen Verfahren zum Betreiben desselben ausgegangen.

In der Mitte der runden Scheibe befindet sich eine starre Zeigerkappe 24, aus der ein dargestellter Laserstrahl oder ein anderer Lichteffekt austritt und von dort aus entlang der Länge des Zeiger 23a verläuft. Die Zeigerkappe 24 wird insbesondere als mittig angeordneter Ausschnitt der runden Scheibe 23 dargestellt. Sie vollzieht allerdings die Rotation der runden Scheibe 23 um 90° und ihre Transformation zum Zeiger 23a nicht mit, sondern wird durch ihre mittige Position in der Frontdarstellung als Zeigerkappe 24 dargestellt und deckt den Ursprung des Zeigers 23a ab.

Mit Bezug zu den Figuren 6A und 6B wird ein Ausführungsbeispiel einer mit dem erfindungsgemäßen Verfahren erzeugten Darstellung mit einem Hintergrundbereich für die Fälle einer "kleinen Bühne" (erster Betriebsmodus) und einer "großen Bühne" (zweiter Betriebsmodus) erläutert. Dabei wird von dem oben mit Bezug zu Figur 1 erläuterten erfindungsgemäßen Fahrzeuginformationssystem und dem erfindungsgemäßen Verfahren zum Betreiben desselben ausgegangen.

Figur 6A zeigt einen Fall, bei dem der erste Betriebsmodus aktiviert ist und die Darstellung 10 mit den Tuben 11, 12 in Frontansicht dargestellt werden. Dabei wird ein Zustand gezeigt, bei dem die Aktivierungsanimation noch nicht vollständig abgelaufen ist, das heißt, die runde Scheibe 23 ist in der rechten Tube 12 noch nicht vollständig rotiert, während die Rotation der runden Scheibe 23 in der linken Tube 11 abgeschlossen ist, aber noch kein Zeiger 23a angezeigt wird. Die Hintergrunddarstellung 61 in diesem Fall der "kleinen Bühne" umfasst eine Anzeige eines Navigationsgeräts, wobei eine Darstellung einer Fahrbahn und einer näheren Umgebung der Fahrbahn angezeigt wird.

Bei dem in Figur 6B gezeigten Fall ist der zweite Betriebsmodus aktiviert und die Darstellung 10 umfasst die Tuben 11, 12 in Seitenansicht. Die Hintergrunddarstellung 62 in diesem Fall der "großen Bühne" nimmt eine größere Fläche als bei der "kleinen Bühne" ein, da der von den Tuben 11, 12 gebildete Zwischenraum größer ist als im ersten Betriebsmodus. Die Hintergrunddarstellung 62 umfasst in diesem Fall ebenfalls eine Anzeige eines Navigationsgeräts mit einer Darstellung einer Fahrbahn, allerdings wird eine relativ zur "kleinen Bühne" größere Umgebung der Fahrbahn dargestellt. Bei dem Übergang vom ersten zum zweiten Betriebsmodus wird in dem Ausführungsbeispiel eine Animation ausgegeben, bei der eine kontinuierliche Veränderung des dargestellten Ausschnitts und eines Vergrößerungsfaktors (Zoom) dargestellt wird.

### Bezugszeichenliste

- 1: Fahrzeug
- 2: Erfassungseinheit
- 3a: Aktivierungseinheit; Türsensor; Einrichtung
- 3b; 3c; 3d: Einrichtung
- 4: Steuereinheit
- 5: Fahrzeuginformationsbildschirm; Display
- 10: Darstellung
- 11: Erste Anzeigeobjekt; linke Tube
- 12: Zweites Anzeigeobjekt; rechte Tube
- 13: Hintergrundbereich
- 21: Außenring
- 22: Innenring
- 23: Runde Scheibe
- 23a: Zeiger
- 24: Zeigerkappe
- 31: Pfeil (Kippbewegung)
- 32: Füllzustands-Anzeige
- 32a: Gefüllter Bereich
- 32b: Leerer Bereich
- 32c: Kritischer Bereich
- 34; 36: Text-Anzeigebereich
- 37; 38: Skalen-Anzeigebereich
- 41; 44; 45: App-Ausgabebereich
- 42; 43: App-Auswahlbereich
- 61: Hintergrundanzeige ("kleine Bühne")
- 62: Hintergrundanzeige ("große Bühne")

## Patentansprüche

1. Fahrzeuginformationssystem für ein Fahrzeug (1) mit
einer Erfassungseinheit (2), durch die Betriebsdaten des Fahrzeugs (1) erfassbar sind;
einer Steuereinheit (4), durch die in Abhängigkeit von den erfassten Betriebsdaten des Fahrzeugs (1) Grafikdaten einer Darstellung von die erfassten Betriebsdaten beschreibenden Informationen (10) erzeugbar sind; wobei
die Darstellung (10) einen Hintergrundbereich (13) und ein erstes (11) und ein zweites (12) perspektivisch dargestelltes Anzeigeobjekt umfasst, wobei zwischen dem ersten (11) und dem zweiten Anzeigeobjekt (12) ein Zwischenraum gebildet wird; und
einem Fahrzeuginformationsbildschirm (5), durch den die Darstellung (10) anzeigbar ist; wobei
das Fahrzeuginformationssystem einen ersten Betriebsmodus und einen zweiten Betriebsmodus aufweist; wobei,
wenn der erste Betriebsmodus aktiviert ist, das erste (11) und zweite Anzeigeobjekt (12) unter einem ersten Betrachtungswinkel dargestellt werden und, wenn der zweite Betriebsmodus aktiviert ist, das erste (11) und zweite Anzeigeobjekt (12) unter einem zweiten Betrachtungswinkel dargestellt werden, wobei
die Fläche des Zwischenraums zwischen dem ersten (11) und dem zweiten Anzeigeobjekt (12) bei einem Übergang zwischen dem ersten und dem zweiten Betriebsmodus verändert wird, wobei die Grafikdaten so erzeugt werden, dass das erste (11) und zweite Anzeigeobjekt (12) der Darstellung unter dem ersten Betrachtungswinkel in einer Draufsicht und unter dem zweiten Betrachtungswinkel in einer Seitenansicht darstellbar sind, **dadurch gekennzeichnet, dass**
in der Seitenansicht die Informationen aus der Draufsicht alphanumerisch dargestellt werden.

2. Fahrzeuginformationssystem nach Anspruch 1,
**dadurch gekennzeichnet, dass**
der Fahrzeuginformationsbildschirm (5) ein Kombiinstrument des Fahrzeugs (1) ist; und
das erste (11) und das zweite Anzeigeobjekt (12) unter dem ersten Betrachtungswinkel als Rundinstrumente darstellbar sind.

3. Fahrzeuginformationssystem gemäß einem der vorhergehenden Ansprüche,
**dadurch gekennzeichnet, dass**
durch die Erfassungseinheit (3) ferner ein Umschaltsignal empfangbar ist und in Abhängigkeit von dem Umschaltsignal der erste oder zweite Betriebsmodus aktivierbar ist; wobei bei dem Übergang zwischen dem ersten und dem zweiten Betriebsmodus eine Übergangsanimation erzeugbar und ausgebbar ist.

4. Fahrzeuginformationssystem gemäß einem der vorhergehenden Ansprüche,
**dadurch gekennzeichnet, dass**
bei dem Übergang von dem ersten zu dem zweiten Betriebsmodus die Darstellung (10) so erzeugbar ist, dass die Fläche des Zwischenraums vergrößerbar ist, wobei eine Rotation des ersten (11) und zweiten Anzeigeobjekts (12) darstellbar ist.

5. Fahrzeuginformationssystem gemäß einem der vorhergehenden Ansprüche,
**dadurch gekennzeichnet, dass**
die Grafikdaten so erzeugt werden, dass der Hintergrundbereich (13) der Darstellung (10) in Abhängigkeit von dem Betriebsmodus erzeugbar ist.

6. Fahrzeuginformationssystem gemäß einem der vorhergehenden Ansprüche,
**dadurch gekennzeichnet, dass**
die erfassten Betriebsdaten eine Geschwindigkeit, Umdrehungszahl, Informationen über verfügbare Anwendungen und/oder einen verfügbaren Energievorrat umfassen; und
die Betriebsdaten zumindest teilweise anhand des ersten (11) und zweiten Anzeigeobjekts (12) ausgebbar sind.

7. Fahrzeuginformationssystem gemäß einem der vorhergehenden Ansprüche,
**dadurch gekennzeichnet, dass**
das erste (11) und zweite Anzeigeobjekt (12) jeweils eine gleiche Grundform aufweisen.

8. Fahrzeuginformationssystem gemäß Anspruch 7,
**dadurch gekennzeichnet, dass**
die Grundform des ersten (11) und zweiten Anzeigeobjekts (12) eine Halbkugeloberfläche umfasst.

9. Fahrzeuginformationssystem gemäß Anspruch 7 oder 8,
**dadurch gekennzeichnet, dass**
die Grundform des ersten (11) und zweiten Anzeigeobjekts (12) einen Außenring (21), einen Innenring (22), eine runde Scheibe (23) und/oder eine Zeigerkappe (24) umfasst.

10. Fahrzeuginformationssystem gemäß einem der vorhergehenden Ansprüche,
**dadurch gekennzeichnet, dass**
das erste (11) und/oder zweite Anzeigeobjekt (12) ein Zeigerelement (23a) umfasst; wobei
das Zeigerelement (23a) anhand eines Lichteffekts darstellbar ist.

11. Fahrzeuginformationssystem gemäß einem der vorhergehenden Ansprüche,
**dadurch gekennzeichnet, dass**
durch eine Aktivierungseinheit (3a) ein Aktivierungssignal empfangbar ist; wobei
in Abhängigkeit von dem Aktivierungssignal eine Aktivierungsanimation erzeugbar und durch den Fahrzeuginformationsbildschirm (5) ausgebbar ist.

12. Fahrzeuginformationssystem gemäß Anspruch 11,
**dadurch gekennzeichnet, dass**
die Aktivierungsanimation eine dynamische Darstellung eines Elements des ersten (11) und zweiten Anzeigeobjekts (12) umfasst, wobei eine Bewegung des ersten (11) und/oder zweiten Anzeigeobjekts (12) relativ zu weiteren Elementen des ersten (11) und zweiten Anzeigeobjekts (12) darstellbar ist.

13. Verfahren zum Betreiben eines Fahrzeuginformationssystems in einem Fahrzeug (1), bei dem
Betriebsdaten des Fahrzeugs (1) erfasst werden;
in Abhängigkeit von den erfassten Betriebsdaten des Fahrzeugs (1) Grafikdaten einer Darstellung von die erfassten Betriebsdaten beschreibenden Informationen (10) erzeugt werden; wobei
die Darstellung (10) einen Hintergrundbereich (13) und ein erstes (11) und ein zweites (12) perspektivisch dargestelltes Anzeigeobjekt umfasst, wobei zwischen dem ersten (11) und dem zweiten Anzeigeobjekt (12) ein Zwischenraum gebildet wird; und
die Darstellung (10) angezeigt wird; wobei
das Fahrzeuginformationssystem einen ersten Betriebsmodus und einen zweiten Betriebsmodus aufweist; wobei,
wenn der erste Betriebsmodus aktiviert ist, das erste (11) und zweite Anzeigeobjekt (12) unter einem ersten Betrachtungswinkel dargestellt werden und, wenn der zweite Betriebsmodus aktiviert ist, das erste (11) und zweite Anzeigeobjekt (12) unter einem zweiten Betrachtungswinkel dargestellt werden, wobei
die Fläche des Zwischenraums zwischen dem ersten (11) und dem zweiten Anzeigeobjekt (12) bei einem Übergang zwischen dem ersten und dem zweiten Betriebsmodus verändert wird, wobei die Grafikdaten so erzeugt werden, dass das erste Anzeigeobjekt (11) und das zweite Anzeigeobjekt (12) der Darstellung unter dem ersten Betrachtungswinkel in einer Draufsicht und unter dem zweiten Betrachtungswinkel in einer Seitenansicht dargestellt werden, **dadurch gekennzeichnet, dass**
in der Seitenansicht die Informationen aus der Draufsicht alphanumerisch dargestellt werden.

14. Verfahren gemäß Anspruch 13,
**dadurch gekennzeichnet, dass**
das erste (11) und das zweite Anzeigeobjekt (12) unter dem ersten Betrachtungswinkel als Rundinstrumente dargestellt werden.

## Claims

1. A vehicle information system for a vehicle (1) having
a detection unit (2), by means of which operational data of the vehicle (1) can be detected;
a control unit (4), by means of which graphic data of a display of information (10) describing the detected operational data can be generated as a function of the detected operational data of the vehicle (1); wherein
the display (10) comprises a background region (13) and a first (11) and a second (12) display object displayed in perspective, wherein an intermediate space is formed between the first (11) and the second display object (12); and
a vehicle information screen (5), by which the display (10) can be displayed; wherein
the vehicle information system has a first operating mode and a second operating mode; wherein
if the first operating mode is activated, the first (11) and second display object (12) are displayed at a first viewing angle and, if the second operating mode is activated, the first (11) and second display object (12) are displayed at a second viewing angle, wherein the surface of the intermediate space between the first (11) and the second display object (12) is changed at a transition between the first and the second operating mode, wherein the graphic data are generated such that the first (11) and second display object (12) of the display can be displayed at a first viewing angle in a top view and at a second viewing angle in a side view, **characterized in that** in the side view the information from the top view is displayed alphanumerically.

2. The vehicle information system according to Claim 1,
**characterized in that**
the vehicle information screen (5) is an instrument cluster of the vehicle (1); and the first (11) and the second display object (12) can be displayed at the first viewing angle as round instruments.

3. The vehicle information system according to any one of the preceding claims, **characterized in that**
by means of the detection unit (3) a switching signal can also be received and the first or second operating mode can also be activated as a function of the switching signal, wherein at the transition between the first and the second operating mode a transition animation can be generated and output.

4. The vehicle information system according to any one of the preceding claims, **characterized in that**
at the transition from the first to the second operating mode the display (10) can be generated so that the surface of the intermediate space can be enlarged, wherein a rotation of the first (11) and second display object (12) can be displayed.

5. The vehicle information system according to any one of the preceding claims, **characterized in that**
the graphic data are generated so that the background region (13) of the display (10) can be generated as a function of the operating mode.

6. The vehicle information system according to any one of the preceding claims, **characterized in that**
the detected operational data comprise a speed, rotational speed, information about available applications and/or an available energy reserve; and
the operational data can be output at least partially by means of the first (11) and second display object (12).

7. The vehicle information system according to any one of the preceding claims, **characterized in that**
the first (11) and second display object (12) in each case have the same basic shape.

8. The vehicle information system according to Claim 7,
**characterized in that**
the basic shape of the first (11) and second display object (12) comprises a hemispherical surface.

9. The vehicle information system according to Claim 7 or 8,
**characterized in that**
the basic shape of the first (11) and second display object (12) comprises an outer ring (21), an inner ring (22), a round disc (23) and/or a pointer cap (24).

10. The vehicle information system according to any one of the preceding claims, **characterized in that**
the first (11) and/or second display object (12) comprises a pointer element (23a); wherein
the pointer element (23a) can be displayed by means of a light effect.

11. The vehicle information system according to any one of the preceding claims, **characterized in that**
an activation signal can be received by an activation unit (3a), wherein as a function of the activation signal an activation animation can be generated and can be output by the vehicle information screen (5).

12. The vehicle information system according to Claim 11,
**characterized in that**
the activation animation comprises a dynamic display of an element of the first (11) and second display object (12), wherein a movement of the first (11) and/or second display object (12) relative to further elements of the first (11) and second display object (12) can be displayed.

13. A method for operating a vehicle information system in a vehicle (1), in which operational data of the vehicle (1) are detected;
as a function of the detected operational data of the vehicle (1) graphic data of a display of the information (10) describing the detected operational data are generated; wherein
the display (10) comprises a background region (13) and a first (11) and a second (12) display object displayed in perspective, wherein an intermediate space is formed between the first (11) and the second display object (12); and
the display (10) is displayed; wherein
the vehicle information system has a first operating mode and a second operating mode; wherein,
if the first operating mode is activated, the first (11) and second display object (2) are displayed at a first viewing angle and, if the second operating mode is activated, the first (11) and second display object (12) are displayed at a second viewing angle, wherein
the surface of the intermediate space is changed between the first (11) and the second display object (12) at a transition between the first and the second operating mode, wherein the graphic data are generated such that the first display object (11) and the second display object (12) of the display are displayed at a first viewing angle in a top view and at the second viewing angle in a side view, **characterized in that**
in the side view the information from the top view is displayed alphanumerically.

14. The method according to Claim 13,
**characterized in that**
the first (11) and he second display object (12) are displayed at the first viewing angle as round instruments.

## Revendications

1. Système d'informations de véhicule pour un véhicule (1) avec
une unité de détection (2), par l'intermédiaire de laquelle les données de fonctionnement du véhicule (1) peuvent être détectées ;
une unité de commande (4), par l'intermédiaire de laquelle, en fonction des données de fonctionnement détectées du véhicule (1), des données graphiques d'une représentation peuvent être générées par des informations (10) décrivant les données de fonctionnement détectées ;
la représentation (10) comprenant une zone d'arrière-plan (13) et un premier (11) et un deuxième (12) objet d'affichage représenté en perspective, moyennant quoi, entre le premier (11) et le deuxième objet d'affichage (12), est formé un espace intermédiaire ; et
un écran d'informations de véhicule (5) par l'intermédiaire duquel la représentation (10) peut être affichée ;
le système d'informations de véhicule comprenant un premier mode de fonctionnement et un deuxième mode de fonctionnement ;
lorsque le premier mode de fonctionnement est activé, le premier (11) et le deuxième objet d'affichage (12) étant représentés sous un premier angle d'observation et, lorsque le deuxième mode de fonctionnement est activé, le premier (11) et le deuxième objet d'affichage (12) étant représentés sous un deuxième angle d'observation,
la surface de l'espace intermédiaire entre le premier (11) et le deuxième objet d'affichage (12) étant modifiée lors d'une transition entre le premier et le deuxième mode de fonctionnement, les données graphiques étant générées de façon à ce que le premier (11) et le deuxième objet d'affichage (12) de la représentation puisse être représentés sous un premier angle d'observation en vue de dessus et sous le deuxième angle d'observation en vue latérale, **caractérisé en ce que**
en vue latérale, les informations provenant de la vue de dessus sont représentées de manière alphanumérique.

2. Système d'informations de véhicule selon la revendication 1,
**caractérisé en ce que**
l'écran d'informations de véhicule (5) est un instrument combiné du véhicule (1) ; et
le premier (11) et le deuxième objet d'affichage (12) peuvent être représentés sous le premier angle d'observation sous la forme d'instruments circulaires.

3. Système d'informations de véhicule selon l'une des revendications précédentes,
**caractérisé en ce que**
par l'intermédiaire de l'unité de détection (3), en outre, un signal de commutation peut être reçu, et, en fonction du signal de commutation, le premier ou le deuxième mode de fonctionnement peut être activé ; moyennant quoi, lors de la transition entre le premier et le deuxième mode de fonctionnement, une animation de transition peut être générée et représentée.

4. Système d'informations de véhicule selon l'une des revendications précédentes,
**caractérisé en ce que**
lors de la transition du premier au deuxième mode de fonctionnement, la représentation (10) peut être générée de façon à ce que la surface de l'espace intermédiaire puisse être agrandie, une rotation du premier (11) et du deuxième objet d'affichage (12) pouvant être représentée.

5. Système d'informations de véhicule selon l'une des revendications précédentes,
**caractérisé en ce que**
les données graphiques sont générées de façon à ce que la zone d'arrière-plan (13) de la représentation (10) puisse être générée en fonction du mode de fonctionnement.

6. Système d'informations de véhicule selon l'une des revendications précédentes,
**caractérisé en ce que**
les données graphiques détectées comprennent une vitesse, une vitesse de rotation, des infirmations concernant des applications disponibles et/ou une réserve d'énergie disponible ; et
les données de fonctionnement peuvent être affichées au moins partiellement à l'aide du premier (11) et du deuxième objet d'affichage (12).

7. Système d'informations de véhicule selon l'une des revendications précédentes,
**caractérisé en ce que**
le premier (11) et le deuxième objet d'affichage (12) présentent une forme de base identique.

8. Système d'informations de véhicule selon la revendication 7,
**caractérisé en ce que**
la forme de base du premier (11) et du deuxième objet d'affichage (12) comprend une surface semi-sphérique.

9. Système d'informations de véhicule selon la revendication 7 ou 8,
**caractérisé en ce que**
la forme de base du premier (11) et du deuxième objet d'affichage (12) comprend un anneau externe (21), un anneau externe (22), une rondelle ronde (23) et/ou un capuchon d'aiguille (24).

10. Système d'informations de véhicule selon l'une des revendications précédentes,
**caractérisé en ce que**
le premier (11) et/ou le deuxième objet d'affichage (12) comprennent un élément à aiguille (23a) ;
l'élément à aiguille (23a) pouvant être représenté à l'aide d'un effet lumineux.

11. Système d'informations de véhicule selon l'une des revendications précédentes,
**caractérisé en ce que**
par l'intermédiaire d'une unité d'activation (3a), un signal d'activation peut être reçu ;
en fonction du signal d'activation, une animation d'activation pouvant être générée et affichée par l'intermédiaire de l'écran d'informations de véhicule (5).

12. Système d'informations de véhicule selon la revendication 11,
**caractérisé en ce que**
l'animation d'activation comprend une représentation dynamique d'un élément du premier (11) et du deuxième objet d'affichage (12), un déplacement du premier (11) et/ou du deuxième objet d'affichage (12) par rapport à d'autres éléments du premier (11) et/ou du deuxième objet d'affichage (12) pouvant être représenté.

13. Procédé d'exploitation d'un système d'informations de véhicule dans un véhicule (1), dans lequel
des données de fonctionnement du véhicule (1) sont détectées ;
en fonction des données de fonctionnement du véhicule (1) détectées, des données graphiques d'une représentation sont générées par des informations (10) décrivant les données de fonctionnement ;
la représentation (10) comprenant une zone d'arrière-plan (13) et un premier (11) et un deuxième (12) objet d'affichage représenté en perspective, moyennant quoi, entre le premier (11) et le deuxième objet d'affichage (12), est formé un espace intermédiaire ; et
la représentation (10) est affichée ;
le système d'informations de véhicule comprenant un premier mode de fonctionnement et un deuxième mode de fonctionnement ;
lorsque le premier mode de fonctionnement est activé, le premier (11) et le deuxième objet d'affichage (12) étant représentés sous un premier angle d'observation et, lorsque le deuxième mode de fonctionnement est activé, le premier (11) et le deuxième objet d'affichage (12) étant représentés sous un deuxième angle d'observation,
la surface de l'espace intermédiaire entre le premier (11) et le deuxième objet d'affichage (12) étant modifiée lors d'une transition entre le premier et le deuxième mode de fonctionnement, les données graphiques étant générées de façon à ce que le premier (11) et le deuxième objet d'affichage (12) de la représentation puisse être représentés sous le premier angle d'observation en vue de dessus et sous le deuxième angle d'observation en vue latérale, **caractérisé en ce que**
en vue latérale, les informations provenant de la vue de dessus sont représentées de manière alphanumérique.

14. Procédé selon la revendication 13,
**caractérisé en ce que**
le premier (11) et le deuxième objet d'affichage (12) sont représentés sous le premier angle d'observation sous la forme d'instruments circulaires.
